# EUROPÄISCHE PATENTSCHRIFT

(11) **EP 1 268 238 B1**
(45) Veröffentlichungstag und Bekanntmachung des Hinweises auf die Patenterteilung: **20.10.2004**
(21) Anmeldenummer: 01927611.2
(22) Anmeldetag: 26.03.2001
(51) Int. Cl.: B60R 21/01, B60R 21/32, B60R 16/02

(54) **VERFAHREN UND VORRICHTUNG ZUM ZÜNDEN MINDESTENS EINES ZÜNDELEMENTS FÜR EIN RÜCKHALTEMITTEL IN EINEM KRAFTFAHRZEUG**
METHOD AND DEVICE FOR TRIGGERING AT LEAST ONE FIRING ELEMENT FOR RESTRAINING MEANS IN A MOTOR VEHICLE
PROCEDE ET DISPOSITIF POUR ALLUMER AU MOINS UN ELEMENT D'ALLUMAGE D'UN MOYEN DE RETENUE DANS UN VEHICULE

(30) Priorität: 29.03.2000 DE 10015688
(43) Veröffentlichungstag der Anmeldung: 02.01.2003
(73) Patentinhaber: SIEMENS AKTIENGESELLSCHAFT, 80333 München (DE)
(72) Erfinder: ZELGER, Christian, 93049 Regensburg (DE)
(86) Internationale Anmeldenummer: PCT/DE2001/001162
(87) Internationale Veröffentlichungsnummer: WO 2001/072556

(56) Entgegenhaltungen:
- EP-A- 0 849 122
- DE-A- 4 425 254
- DE-A- 19 739 808
- DE-A- 19 740 019
- US-A- 5 916 289

## Beschreibung

Die Erfindung betrifft ein Verfahren und eine Vorrichtung zum Zünden mindestens eines Zündelements für ein Rückhaltemittel in einem Kraftfahrzeug.

Anordnungen zum Auslösen eines Rückhaltemittels in einem Kraftfahrzeug haben üblicherweise einen Sensor zur Unfallerkennung, eine dem Sensor nachgeschaltete Steuereinrichtung, eine räumlich getrennt von der Steuereinrichtung angeordnete und mit dieser über eine Leitung verbundene Zündeinrichtung sowie mindestens ein mit der Zündeinrichtung elektrisch gekoppeltes Zündelement (zum Beispiel eine Zündpille) für das Rückhaltemittel.

Sollen dabei beispielsweise mehrere Zündpillen mit einem Zündbefehl gleichzeitig gezündet werden, aber nicht alle Zündpillen den ersten Zündbefehl erkennen und/oder zünden, kann die üblicherweise als Zündbus ausgeführte Übertragungsstrecke zwischen Steuereinrichtung und Zündeinrichtung unter Umständen so gestört werden, dass keine weiteren Zündbefehle mehr übertragen werden können. Dies ist beispielsweise dann der Fall, wenn durch einzelne ungewollte Detonationen ein Kurzschluss oder eine Unterbrechung am Bus auftritt. Eine Zündung der verbleibenden Zündpillen ist dann nicht mehr möglich, da kein weiterer Zündbefehl gesendet werden kann.

Das Dokument EP 0 849 122 A1 offenbart ein Verfahren zum Zünden mindestens eines Zündelements für ein Rückhaltemittel in einem Kraftfahrzeug, bei dem ein Zündbefehl von einer Steuereinrichtung zu einer Zündeinrichtung für das/die Zündelement(e) übertragen wird.

Aufgabe der Erfindung ist es, ein Verfahren und eine Anordnung zum Zünden mindestens eines Zündelements für ein Rückhaltemittel in einem Kraftfahrzeug anzugeben, die eine höhere Störsicherheit bieten.

Die Aufgabe wird durch ein Verfahren gemäß Patentanspruch 1 bzw. durch eine Vorrichtung gemäß Patentanspruch 4 gelöst.

Ausgestaltungen und Weiterbildungen des Erfindungsgedankens sind Gegenstand von Unteransprüchen.
Die Erfindung sieht vor, die Zündbefehle zunächst mehrmals (beispielsweise 3mal) zu übertragen, während dieser Zeit eine Zündung zu verzögern und erst nach dieser Mehrfachübertragung eine Zündung der Zündelemente beispielsweise durch den ersten Zündbefehl zuzulassen.

Im einzelnen wird dies durch ein Verfahren mit den folgend aufgeführten Schritten erreicht. Zunächst wird ein Zündbefehl und anschließend der Zündbefehl n-fach wiederholt von einer Steuereinrichtung zu einer Zündeinrichtung für das Zündelement/die Zündelemente übertragen, wobei n mindestens gleich 1 ist. Danach werden die n+1 übertragenen Zündbefehle in der Zündeinrichtung ausgewertet und das/die Zündelement(e) durch die Zündeinrichtung nach Übertragung des letzten n+1 beispielsweise durch den ersten Zündbefehl gezündet.

Die Zündansteuerung der Zündelemente wird dabei bevorzugt mindestens einmal wiederholt oder der Einfachheit halber mit der Anzahl der übertragenen Zündbefehle gekoppelt, um fehlerhafterweise noch nicht gezündete Zündelemente zu zünden. Darüber hinaus kann neben einem gleichzeitigen Zünden mehrerer Zündelemente auch ein zeitlich versetztes Zünden der Zündelemente vorgesehen werden, so dass die Zündelemente nacheinander gezündet werden.

Eine erfindungsgemäße Vorrichtung enthält eine Steuereinrichtung zum Erzeugen von n+1 identischen Zündbefehlen, eine Zündeinrichtung zum Zünden des mindestens einen Zündelements durch Aufschalten eines Zündsignals auf das Zündelement und eine Übertragungseinrichtung zum Übertragen der Zündbefehle von der Steuereinrichtung zur Zündeinrichtung. Dabei erfolgt das Zünden des Zündelements durch die Zündeinrichtung erst nach Übertragung des letzten der n+1 Zündbefehle, beispielsweise durch den ersten Zündbefehl.

Zum Sicherstellen, dass das Zünden des Zündelements/der Zündelemente nach Übertragung des letzten der n+1 Zündbefehle erfolgt, wird bei der Steuereinrichtung eine Verzögerungseinrichtung zum Verzögern des Zündsignals vorgesehen, wobei die Verzögerungseinrichtung durch den ersten Zündbefehl getriggert wird und eine Verzögerungszeit aufweist, die länger ist als die Zeit, die zum Übertragen aller Zündbefehle notwendig ist. Der Einsatz einer Verzögerungseinrichtung erlaubt es, das/die Zündelement(e) so zu betreiben, dass ein Zünden die Übertragung der Zündbefehle nicht stören kann und/oder erst mehrmaliges Wiederholen des Zündsignals diese zum Zünden bringt.

Um die Störsicherheit weiter zu erhöhen, können die Zündbefehle in der Steuereinrichtung codiert werden und in codierter Form an die Zündeinrichtung übertragen werden. Die Zündeinrichtung enthält einen Zündbefehlsdecoder, um die Zündbefehle zu decodieren und daraus die Zündsignale für die Zündelemente zu erzeugen.

Schließlich kann vorgesehen werden, mehrere Zündelemente durch die Zündeinrichtung nacheinander zu zünden, um eine gleichmäßigere Auslastung der Stromversorgung für die Zündelemente zu erzielen.

Die Erfindung wird nachfolgend anhand der in den Figuren der Zeichnung dargestellten Ausführungsbeispiele erläutert. Es zeigt:
- Fig. 1: ein erstes Ausführungsbeispiel einer erfindungsgemäßen Vorrichtung zum gleichzeitigen Zünden mehrerer Zündelemente,
- Fig. 2: ein zweites Ausführungbeispiel einer erfindungsgemäßen Vorrichtung zum zeitversetzten Zünden mehrerer Zündelemente, und
- Fig. 3: ein drittes Ausführungsbeispiel einer erfindungsgemäßen Vorrichtung zum zeitversetzten Zünden mehrerer Zündelemente.

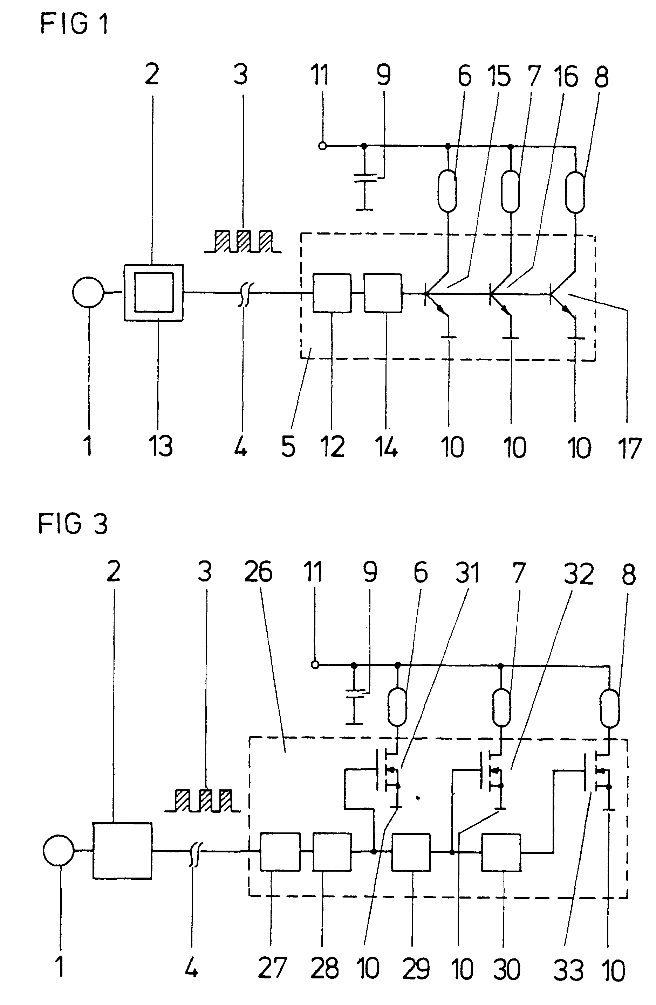

Bei dem in Fig. 1 gezeigten Ausführungsbeispiel ist ein Aufprallsensor 1 vorgesehen, dem eine Steuereinrichtung 2 zur Auswertung der vom Aufprallsensor 1 gelieferten Signale nachgeschaltet ist. Im Falle eines Aufpralls wird dies der Steuereinrichtung 2 durch entsprechende Signale des Sensors 1 mitgeteilt, worauf diese mehrere, beispielsweise drei Zündbefehle 3 über eine Leitung 4 an eine Zündeinrichtung 5 sendet. Die Zündbefehle 3 werden von der Zündeinrichtung 5 identifiziert. Nach einer bestimmten Anzahl identischer Zündbefehle 3 (beispielsweise die Anzahl der insgesamt übertragenen Zündbefehle 3 entsprechend drei Zündbefehlen beim Ausführungsbeispiel) werden dann drei als Zündelemente vorgesehene Zündpillen 6, 7, 8 durch die Zündeinrichtung 5 gezündet. Dazu wird ein Zündsignal (Strom, Spannung) ausreichender Stärke bei Auftreten des ersten verzögerten Zündbefehls an die Zündpillen 6, 7, 8 angelegt. Die Versorgung der Zündpillen erfolgt durch eine nicht näher dargestellte Versorgungsspannungsquelle mit einem Bezugspotential 10 und einem Versorgungspotential 11. Um Spannungseinbrüche der Versorgungsspannungsquelle beim Zünden der Zündpillen 6, 7, 8 zu verhindern, ist zudem ein Pufferkondensator 9 zwischen das Bezugspotential 10 und das Versorgungspotential 11 geschaltet.

Die Zündeinrichtung 5 enthält eine Decodiereinrichtung 12, die die von der Steuereinrichtung 2 mittels einer Codiereinrichtung 13 codierten Zündbefehle 3 decodiert. Der Decodiereinrichtung 12 ist eine Verzögerungseinrichtung 14 nachgeschaltet, die die Zündbefehle 3 solange verzögern, bis alle Zündbefehle 3 von der Steuereinrichtung 2 zur Zündeinrichtung 5 übertragen worden sind. Das bedeutet, dass am Ausgang der Verzögerungseinrichtung 14 der zuerst übersandte Zündbefehl dann erscheint, wenn bereits der letzte der Zündbefehle 3 von der Steuereinrichtung 2 zur Zündeinrichtung 5 übertragen worden ist.

Der Ausgang der Verzögerungseinrichtung 14 steuert die Basisanschlüsse dreier Transistoren 15, 16, 17, deren Emitter-Kollektor-Strecken in Reihe zu den Zündpillen 6, 7, 8 zwischen das Bezugspotential 10 und das Versorgungspotential 11 geschaltet sind. Bei Auftreten der entsprechenden Anzahl von Zündbefehlen wird also von der Decodiereinrichtung ein erstes Zündsignal bereitgestellt, das von der Verzögerungseinrichtung 14 verzögert wird. Das verzögerte Signal schaltet dann die Transistoren 15, 16 und 17 durch, wodurch diese ein Zündsignal für die Zündpillen 6, 7, 8 bereitstellen. In diesem Fall werden die Zündpillen 6, 7, 8 auf die Versorgungsspannungsquelle aufgeschaltet, wodurch diese im Wesentlichen gleichzeitig zünden.

Alternativ kann aber auch vorgesehen werden, dass die Verzögerungseinrichtung vor die Decodiereinrichtung geschaltet wird und diese den Ausgang der Decodiereinrichtung 12 direkt steuert. Das heißt, dass die Zündbefehle 3 verzögert zur Decodiereinrichtung 12 gelangen und daran anschließend die Transistoren 15, 16, 17 die Zündpillen 6, 7, 8 auf die Versorgungsspannungsquelle aufschalten.

Des Weiteren können die Decodiereinrichtung und die Verzögerungseinrichtung so ausgebildet werden, dass jedem der Zündbefehle 3 entsprechend ein Durchschalten der Transistoren 15, 16 und 17 erfolgt, wobei die Zündpillen 6, 7, 8 nicht durch einen Zündbefehl alleine durchgeschaltet werden können (zu geringe Leistung eines einzelnen Zündsignals) und erst nach mehreren im geringen Zeitabstand aufeinanderfolgende Zündsignalen (entsprechend den Zündbefehlen 3) gezündet werden.

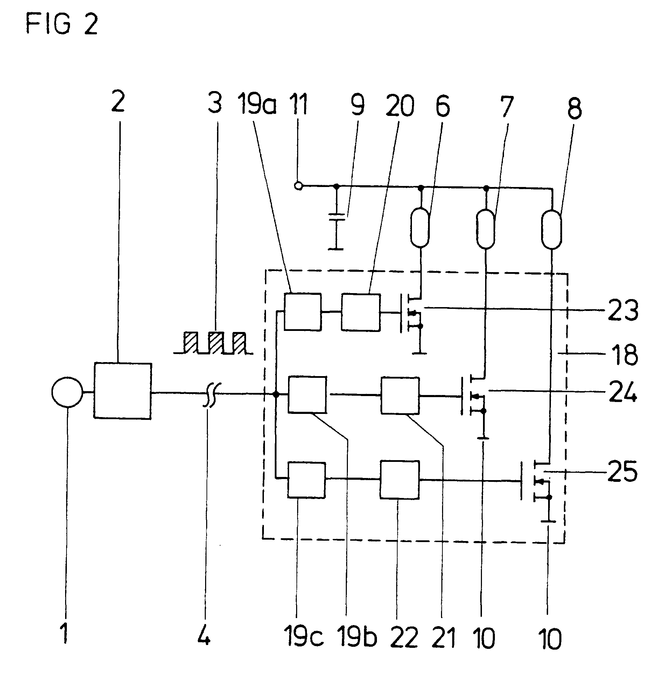

Das in Fig. 2 gezeigte Ausführungsbeispiel ist gegenüber dem Ausführungsbeispiel nach Fig. 1 dahingehend abgeändert, dass anstelle der Zündeinrichtung 5 eine Zündeinrichtung 18 verwendet wird. Die Zündeinrichtung 18 umfasst drei Decodiereinrichtung 19a, 19b, 19c, welche über die Leitung 4 die Zündbefehle 3 von der Steuereinrichtung 2 erhalten. Den Decodiereinrichtungen 19a, 19b, 19c sind jeweils Verzögerungseinrichtungen 20, 21, 22 nachgeschaltet dergestalt, dass deren Eingänge jeweils mit dem Ausgang einer der Decodiereinrichtungen 19a, 19b, 19c verbunden sind. Die Verzögerungseinrichtungen 20, 21, 22 weisen einander gegenüber unterschiedlich lange Verzögerungszeiten auf, wobei jede der Verzögerungszeiten länger ist als die Zeit, die zum Übertragen der drei Zündbefehle 3 von der Steuereinrichtung 2 zur Zündeinrichtung 18 benötigt wird. Den Verzögerungseinrichtungen 20, 21, 22 folgt jeweils ein Transistor 23, 24, 25 zum Aufschalten der Zündpillen 6, 7, 8 auf die Versorgungsspannung. Aufgrund der untereinander unterschiedlichen, jedoch gegenüber dem Übertragungszeitraum längeren Verzögerungszeiten der Verzögerungseinrichtungen 20, 21, 22 ergibt sich somit ein sequentielles Zünden der Zündpillen 6, 7, 8, was unter anderem den Vorteil hat, dass die Versorgungsspannungsquelle (und der Kondensator 9) nicht so stark belastet werden, wie bei einem gleichzeitigen Zünden der Zündpillen 6, 7, 8.

Das Ausführungsbeispiel nach Fig. 3 geht aus dem in Fig. 2 gezeigten Ausführungsbeispiel dadurch hervor, dass anstelle der Zündeinrichtung 5 in Fig. 1 eine Zündeinrichtung 26 in Fig. 3 verwendet wird. Die Zündeinrichtung 26 enthält eine Decodiereinrichtung 27 zum Empfang der Zündbefehle 3 von der Steuereinrichtung 2 über die Leitung 4. Der Decodiereinrichtung folgt eine Verzögerungseinrichtung 28, der eine Verzögerungseinrichtung 29 und daran anschließend eine Verzögerungseinrichtung 30 nachgeschaltet sind. An den Ausgang jeweils einer der Verzögerungseinrichtungen 28, 29, 30 ist ein Transistor 31, 32, 33 angeschlossen, der zum Aufschalten der Zündpillen 6, 7, 8 auf die Versorgungsspannung vorgesehen ist. Dabei hat die Verzögerungseinrichtung 28, welche direkt der Decodiereinrichtung 27 nachfolgt, eine Verzögerungszeit, die größer ist als die zur Übertragung der Zündbefehle 3 benötigten Zeit. Die Verzögerungszeiten der Verzögerungseinrichtungen 29 und 30 sind dem gegenüber frei wählbar.

Die gezeigten Ausführungsformen eignen sich also zur Durchführung eines erfindungsgemäßen Verfahrens, bei dem ein Zündbefehl mehrfach von der Steuereinrichtung zu der Zündeinrichtung für die Zündelemente (Zündpillen) übertragen werden. In der Zündeinrichtung werden die übertragenen Zündbefehle ausgewertet und nach erfolgter Übertragung der Zündbefehle die Zündpillen zeitverzögert gezündet. Die Zeitverzögerung kann dabei entweder durch eine ausreichend bemessene Verzögerungszeit oder aber durch Auszählen der Zündbefehle realisiert werden.

## Patentansprüche

1. Verfahren zum Zünden mindestens eines Zündelements (6, 7, 8) für ein Rückhaltemittel in einem Kraftfahrzeug mit den Schritten:
• Übertragen eines Zündbefehls (3) von einer Steuereinrichtung (2) zu einer Zündeinrichtung (5) für das/die Zündelement(e),
• n-faches Wiederholen der Übertragung des Zündbefehls (3) von der Steuereinrichtung zu der Zündeinrichtung, wobei n mindestens gleich eins ist,
• Auswerten der n+1 übertragenen Zündbefehle (3) in der Zündeinrichtung (5) und
• Zünden der Zündelemente durch die Zündeinrichtung nach Übertragen des letzten der n+1 Zündbefehle.

2. Verfahren nach Anspruch 1, bei dem die Zündelemente (6, 7, 8) nacheinander gezündet werden.

3. Vorrichtung zum Zünden mindestens eines Zündelements (6, 7, 8) für ein Rückhaltemittel in einem Kraftfahrzeug mit
• einer Steuereinrichtung (2) zum Erzeugen von Zündbefehlen (3),
• einer Zündeinrichtung (5) zum Zünden des/der Zündelement(e) (6, 7, 8) durch Aufschalten eines Zündsignals auf das/die Zündelement(e) (6, 7, 8) und
• einer Übertragungseinrichtung (4) zum Übertragen der Zündbefehle (3) von der Steuereinrichtung (2) zu der Zündeinrichtung (5),
**dadurch gekennzeichnet,**
• **dass** die Steuereinrichtung zum Erzeugen n+1 identischer Zündbefehle ausgebildet ist und
• **dass** das Zünden des/der Zündelemente(s) (6, 7, 8) durch die Zündeinrichtung (5) erst nach Übertragen des letzten der n+1 Zündbefehle (3) erfolgt.

4. Vorrichtung nach Anspruch 3, bei der die Steuereinrichtung eine Verzögerungseinrichtung (14, 20, 21, 22, 28, 29, 30) zum Verzögern des Zündsignals (3) aufweist, wobei die Verzögerungseinrichtung (14, 20, 21, 22, 28, 29, 30) durch den ersten Zündbefehl getriggert wird und eine Verzögerungszeit aufweist, die länger ist als die Zeit, die zum Übertragen aller Zündbefehle (3) notwendig ist.

5. Vorrichtung nach Anspruch 3 oder 4, bei der die Steuereinrichtung (2) codierte Zündbefehle (3) abgibt und die Zündeinrichtung (5) einen Zündbefehlsdecoder (12, 19, 27) zum Decodieren der Zündbefehle aufweist.

6. Vorrichtung nach Anspruch 3, 4 oder 5, bei der die Zündeinrichtung (5) mehrere Zündelemente (6, 7, 8) nacheinander zündet.

## Claims

1. Method for firing at least one firing element (6, 7, 8) for a restraining means in a motor vehicle having the steps:
• a firing command (3) is transmitted from a control device (2) to a firing device (5) for the firing element or elements,
• the transmission of the firing command (3) from the control device to the firing device is repeated n times, n being at least equal to one,
• the n + 1 transmitted firing commands (3) are evaluated in the firing device (5), and
• the firing elements are fired by the firing device after the last of the n+1 firing commands has been transmitted.

2. Method according to Claim 1, in which the firing elements (6, 7, 8) are fired successively.

3. Device for firing at least one firing element (6, 7, 8) for a restraining means in a motor vehicle having
• a control device (2) for generating firing commands (3),
• a firing device (5) for firing the firing element or elements (6, 7, 8) by connecting a firing signal to the firing element or elements (6, 7, 8), and
• a transmission device (4) for the transmission of the firing commands (3) from the control device (2) to the firing device (5),
**characterized in that**
• the control device is designed for generating n+1 identical firing commands and
• the firing element or elements (6, 7, 8) is/are not fired by the firing device (5) until the last of the n+1 firing commands (3) has been transmitted.

4. Device according to Claim 3, in which the control device is a delay device (14, 20, 21, 22, 28, 29, 30) for delaying the firing signal (3), the delay device (14, 20, 21, 22, 28, 29, 30) being triggered by the first firing command, and having a delay which is longer than the time which is necessary for the transmission of all the firing commands (3).

5. Device according to Claim 3 or 4, in which the control device (2) outputs coded firing commands (3), and the firing device (5) has a firing command decoder (12, 19, 27) for decoding the firing commands.

6. Device according to Claim 3, 4 or 5, in which the firing device (5) fires a plurality of firing elements (6, 7, 8) in succession.

## Revendications

1. Procédé pour allumer au moins un élément d'allumage (6, 7, 8) affecté à un moyen de retenue dans un véhicule automobile, qui comprend les étapes suivantes :
• transmission d'un ordre d'allumage (3) d'un dispositif de commande (2) à un dispositif d'allumage (5) affecté à l'élément d'allumage ou aux élément(s) d'allumage,
• répétition n fois de la transmission de l'ordre d'allumage (3) du dispositif de commande au dispositif d'allumage, où n est au moins égal à un,
• exploitation des n+1 ordres d'allumage (3) transmis dans le dispositif d'allumage (5) et
• allumage des éléments d'allumage par le dispositif d'allumage après la transmission du dernier des n+1 ordres d'allumage.

2. Procédé selon la revendication 1, dans lequel les éléments d'allumage (6, 7, 8) sont allumés l'un après l'autre.

3. Dispositif pour l'allumage d'au moins un élément d'allumage (6, 7, 8 affecté à un moyen de retenue dans un véhicule automobile, qui comprend :
• un dispositif de commande (2) destiné à produire des ordres d'allumage (3),
• un dispositif d'allumage (5) destiné à allumer le ou les élément(s) d'allumage (6, 7, 8) par l'application d'un signal d'allumage à l'élément d'allumage ou aux éléments d'allumage (6, 7, 8), et
• un dispositif de transmission (4) destiné à la transmission des ordres d'allumage (3) du dispositif de commande (2) au dispositif d'allumage (5),
**caractérisé en ce que**
• le dispositif de commande est construit pour produire n+1 ordres d'allumage identiques, et
• l'allumage de l'élément d'allumage ou des éléments d'allumage (6, 7, 8) est réalisé par le dispositif d'allumage (5) seulement après la transmission du dernier des n+1 ordres d'allumage (3).

4. Dispositif selon la revendication 3, dans lequel le dispositif de commande présente un dispositif de retardement (14, 20, 21, 22, 28, 29, 30) destiné à retarder le signal d'allumage (3), le dispositif de retardement (14, 20, 21, 22, 28, 29, 30) étant déctenché par le premier ordre d'allumage et présentant un temps de retardement qui est plus long que le temps qui est nécessaire pour transmettre tous les ordres d'allumage (3).

5. Dispositif selon la revendication 3 ou 4, dans lequel le dispositif de commande (2) émet des ordres d'allumage (3) codés et le dispositif d'allumage (5) comprend un décodeur d'ordres d'allumage (12, 19, 27) destiné à décoder les ordres d'allumage.

6. Dispositif selon la revendication 3, 4, ou 5, dans lequel le dispositif d'allumage (5) allume l'un après l'autre plusieurs éléments d'allumage (6,7 ,8).
